# FASCICULE DE BREVET EUROPEEN

(11) **EP 3 100 071 B1**
(45) Date de publication et mention de la délivrance du brevet: **02.12.2020**
(21) Numéro de dépôt: 15704062.7
(22) Date de dépôt: 22.01.2015
(51) Int. Cl.: G01T 1/24, G01T 7/00

(54) **DISPOSITIF POUR VISUALISER DES RAYONNEMENTS PHOTONIQUES, ADAPTÉ POUR TRAVAILLER DANS UN ENVIRONNEMENT RADIOACTIF ET CAMÉRA UTILISANT UN TEL DISPOSITIF**
VORRICHTUNG ZUR BETRACHTUNG PHOTONISCHER STRAHLUNG ZUM ARBEITEN IN EINER RADIOAKTIVEN UMGEBUNG UND KAMERA MIT SOLCH EINER VORRICHTUNG
DEVICE FOR VIEWING PHOTONICS RADIATION, SUITABLE FOR WORKING IN A RADIOACTIVE ENVIRONMENT, AND CAMERA USING SUCH A DEVICE

(30) Priorité: 29.01.2014 FR 1400232
(43) Date de publication de la demande: 07.12.2016
(73) Titulaire: Ermes, 91400 Saclay (FR)
(72) Inventeur: DEJAVDAN, Guillaume, 78490 Montfort L'Amaury (FR)
(74) Mandataire: Mazabraud, Xavier
(86) Numéro de dépôt international: PCT/FR2015/050156
(87) Numéro de publication internationale: WO 2015/114237

(56) Documents cités:
- EP-A1- 0 181 446
- US-A- 5 576 561
- US-A1- 2013 306 881

## Description

L'invention se situe dans le domaine des dispositifs permettant de prendre des images dans un environnement radioactif, notamment d'une source gamma.

Pour des opérations de maintenance, d'inspection ou de surveillance, par exemple dans une centrale nucléaire, une usine de traitement de déchets nucléaires, un site de décontamination ou lors d'une opération de démantèlement d'un site nucléaire, il peut être nécessaire de pouvoir observer, particulièrement dans le domaine des longueurs d'ondes visibles, même dans des lieux ou locaux soumis à un environnement radioactif. Il existe des caméras résistantes aux forts niveaux de radiation, utilisant la technologie « tube ». Cependant, de telles caméras sont encombrantes, lourdes et couteuses, en outre, présentent l'inconvénient de ne produire que des images en noire et blanc, et, ces images ne sont pas numériques. Les caméras numériques actuelles sont sensibles aux environnements radioactifs ; notamment, leur capteur y est vite saturé, ou détruit trop rapidement, pour qu'une telle caméra puisse être utilisée dans un tel environnement.

Plus exceptionnellement, en cas d'accident nucléaire, il faut pouvoir établir une cartographie pour intervenir plus rapidement et plus précisément à la source d'une émission ou d'une contamination. On utilise actuellement des caméras gamma à distance, du fait de leur sensibilité aux environnements radioactifs, par exemple depuis un hélicoptère survolant une zone radioactive.

Or, si l'on veut cartographier les sources de rayonnement, on est parfois obligé de faire entrer la caméra dans une enceinte irradiée. US5576561 décrit des dispositifs basés sur une caméra de type CCD et des techniques pour améliorer les performances de tels dispositifs en présence de rayonnement ionisant, par exemple des rayons X, des rayons gamma et des particules chargées énergétiques.

Le but de l'invention est de proposer un ou plusieurs dispositifs permettant de prendre des images, fixes ou mobiles, dans un environnement radioactif, notamment afin de déterminer la position d'une source radioactive, par exemple une source gamma. De préférence, de tels dispositifs doivent pouvoir supporter des doses cumulées comprises entre 1 kiloGray et 1 mégaGray et des débits pouvant atteindre plusieurs kiloGray.h⁻¹, quelquefois même plusieurs dizaines de kiloGray.h⁻¹.

Dans un environnement radioactif, l'image obtenue est progressivement encombrée de points correspondant à des impacts successifs de particules gamma sur le capteur, l'image ayant de ce fait un aspect neigeux. Du fait d'une rémanence importante, l'image se remplit progressivement de points jusqu'à en être saturée, c'est-à-dire sensiblement uniformément colorée, de sorte que cette image n'est plus exploitable.

Dans le cas de l'observation du rayonnement visible, le rayonnement gamma qui est émis par l'environnement radioactif produit le même effet de neige qui vient peu à peu recouvrir l'image du rayonnement visible, jusqu'à rendre cette image inexploitable.

Plusieurs solutions sont apparues, chacune utilisable seule ou en combinaison avec l'une des autres. En premier lieu, il est apparu que certains composants électroniques, notamment des capteurs d'images peuvent être régénérés, après qu'ils aient été soumis à un rayonnement. Une telle régénération peut être obtenue par chauffage.

Selon un premier objet de l'invention, un dispositif pour capturer une image dans un environnement radioactif tel que définit dans la revendication 1 est prévu. Un dispositif de capture d'une image, ou de plusieurs, fixe ou vidéo, dans un environnement radioactif comprend au moins deux capteurs d'image, et des moyens pour régénérer alternativement chaque capteur, de préférence par chauffage.

Les moyens de capture peuvent comprendre un support pour les capteurs, le support étant mobile entre une position dans laquelle un premier des capteurs est dans une zone de capture pour l'image et un deuxième capteur est dans une zone de régénération, et, une position dans laquelle le deuxième des capteurs est dans une zone de capture et le premier capteur est dans une zone de régénération. La zone de régénération comprend avantageusement une zone de chauffage pour les capteurs et une zone de refroidissement après chauffage.

De préférence, le dispositif comprend trois capteurs d'image, de sorte qu'un premier capteur est dans la zone de capture, pendant qu'un deuxième, précédemment dans la zone de capture, est dans la zone de chauffage, pendant qu'un troisième, précédemment chauffé, est dans la zone de refroidissement.

Pour contrôler la température des composants, notamment des capteurs d'image, lors du chauffage, on peut utiliser un capteur de température de type platine, par exemple du type PT100™ ou PT1000™, fourni par la société Prosensor™ ; un tel capteur de température est avantageusement collé sur le composant à surveiller, de préférence avec une colle haute température, par exemple la colle EPOTEK H77™, fournie par la société Epotek™. Pour éviter la fonte de soudures des composants, on utilise de préférence une soudure haute température, par exemple la soudure DHMP 500G REEL™ fournie par la société Multicore™.

On utilise, pour un dispositif selon l'invention, de préférence, un capteur d'image vidéo utilisant la technologie CMOS. Un tel capteur d'image normalement prévu pour la capture d'images dans le domaine du visible, peut aussi être utilisé pour capturer un rayonnement gamma. En effet, les rayons gammas engendrent sur le capteur l'effet de neige déjà cité ; notamment, ceci permet d'obtenir une image exploitable de ce rayonnement gamma, avec une approximation suffisante pour localiser une ou plusieurs sources de rayonnement gamma, sans utiliser, par exemple, de caméras à scintillement, qui ne résistent pas suffisamment à un environnement fortement radioactif.

Des moyens de commande du cycle de régénération, notamment du cycle de chauffage, et/ou les moyens de traitement des informations recueillies par le capteur, notamment pour restituer une image à partir desdites informations, sont avantageusement maintenus à distance, en dehors de toute zone fortement irradiée.

Selon un autre objet, l'invention porte sur une caméra comprenant un tel dispositif de capture selon l'invention, notamment une caméra adaptée pour faire des images d'un rayonnement visible, tout en protégeant les capteurs de l'environnement radioactif.

De préférence, cette caméra comprend un corps définissant deux compartiments dont un premier compartiment contient un objectif et un miroir, et le deuxième compartiment comprend le dispositif de capture, le miroir étant disposé pour renvoyer latéralement un rayonnement transmis par l'objectif vers une zone de capture dudit dispositif. Avantageusement, le corps forme un blindage destiné à protéger le dispositif de capture d'un rayonnement non observé, notamment d'un rayonnement en dehors des longueurs d'onde visibles par l'homme, notamment d'un rayonnement gamma qui viendrait trop rapidement saturer les capteurs.

Une caméra peut en outre comprendre un collimateur. Le collimateur peut être une galette en un métal de numéro atomique élevé, de préférence du plomb ou du tungstène, ladite galette étant percée de trous, de préférence cylindriques ou coniques, parallèlement à un axe d'observation souhaité.

Le collimateur peut aussi être utilisé avec une caméra n'utilisant qu'un seul capteur et/ou un dispositif selon l'invention, placé directement derrière l'objectif.

Des modes de réalisation et des variantes seront décrits ci-après, à titre d'exemples non limitatifs, avec référence aux dessins annexés dans lesquels :
- la figure 1 représente schématiquement un premier dispositif selon l'invention, utilisant trois capteurs montés sur un support rotatif ;
- la figure 2 représente schématiquement un deuxième dispositif selon l'invention, utilisant trois capteurs montés sur un support translatif ;
- la figure 3 illustre schématiquement une caméra selon l'invention, utilisant le dispositif de la figure 2 ; et,
- la figure 4 illustre schématiquement un collimateur qui peut être utilisé en combinaison avec un dispositif de l'une des figures 1 ou 2.

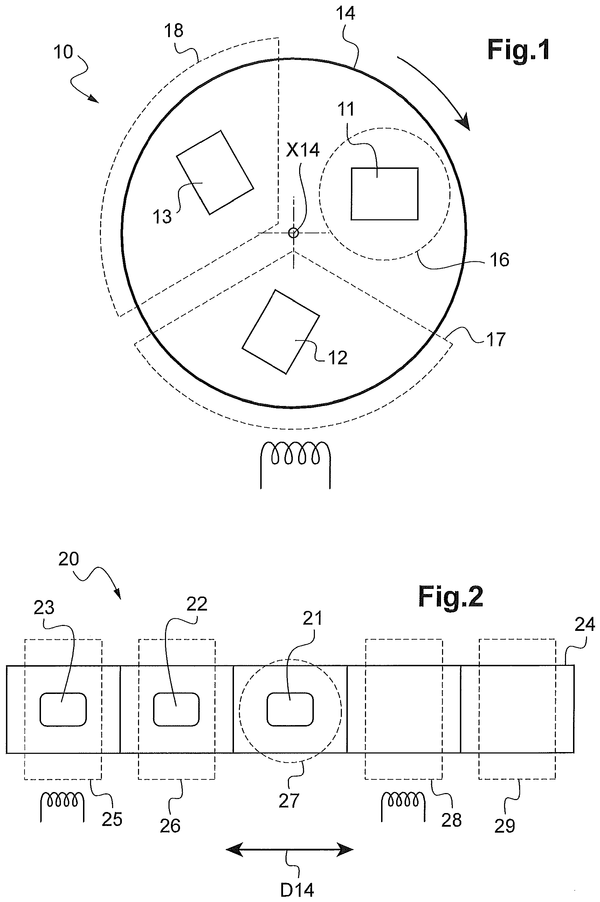

La figure 1 illustre un dispositif 10 de capture d'images adapté pour être utilisé dans une caméra soumise à un environnement radioactif. Ce dispositif comprend trois capteurs 11, 12, 13 montés sur un support 14. Dans cet exemple, le support est un disque monté rotatif autour d'un axe X14 central et perpendiculaire au disque.

Le dispositif comprend en outre trois zones 16, 17, 18, illustrées en pointillés à la figure 1, dont :
- une zone de capture 16, dans laquelle un premier capteur 11, parmi les trois capteurs, est exposé à un rayonnement dont on veut faire une image ;
- une zone de chauffage 17, dans laquelle un deuxième capteur 12, précédemment exposé, est chauffé pour être régénéré ; et
- une zone de refroidissement 18, dans laquelle le troisième capteur 13 est refroidi après avoir été chauffé.

Ainsi disposé, par des rotations successives du disque 14, chaque capteur passe successivement d'une zone à l'autre. Ainsi, un capteur est exposé dans la zone de capture, puis après une première rotation, il est régénéré dans la zone de chauffage, pendant que le suivant est exposé, puis il est refroidi dans la zone de refroidissement, pendant que le troisième capteur est à son tour exposé.

La figure 2 illustre un autre mode de réalisation pour un dispositif de capture selon l'invention. Dans cet exemple, le dispositif 20 comprend aussi trois capteurs 21, 22, 23, et un support en forme de réglette 24. Les trois capteurs sont alignés entre eux sur la réglette 24. Le dispositif comprend en outre cinq zones qui sont, telles que représentées sur la figure 2, de gauche à droite :
- une première zone de chauffage 25 ;
- une première zone de refroidissement 26 ;
- une zone de capture 27 ;
- une deuxième zone de chauffage 28 ; et,
- une deuxième zone de refroidissement 29.

A la figure 2, la réglette 24 est disposée de sorte qu'un premier capteur 21 est dans la zone de capture 27, un deuxième capteur 22 est dans la première zone de refroidissement 26, et le troisième capteur 23 est dans la première zone de chauffage 25.

La réglette 24 est montée coulissante à l'intérieur des cinq zones 25-29 de sorte que lorsqu'on déplace la réglette parallèlement à une direction D14, de la gauche vers la droite, de zone en zone :
- le premier capteur 21 passe de la zone de capture 27 à la deuxième zone de chauffage 28, puis, de la deuxième zone de chauffage à la deuxième zone de refroidissement ; de même que simultanément,
- le deuxième capteur 22 passe de la première zone de refroidissement 26 à la zone de capture, puis, de la zone de capture 27 à la deuxième zone de chauffage 28 ; de même que simultanément,
- le troisième capteur 23 passe de la première zone de chauffage 25 à la première zone de refroidissement, puis de la première zone de refroidissement 26 à la zone de capture 27.

Ensuite, une translation parallèle à la direction D14, vers la gauche, permet de ramener la réglette 24 dans sa position initiale de la figure 2, de sorte qu'un cycle complet est réalisé. Chaque capteur 21-23 peut donc prendre, au cours d'un cycle complet, une position de capture, puis de chauffage, puis de refroidissement, comme dans le dispositif de la figure 1, avec les mêmes avantages.

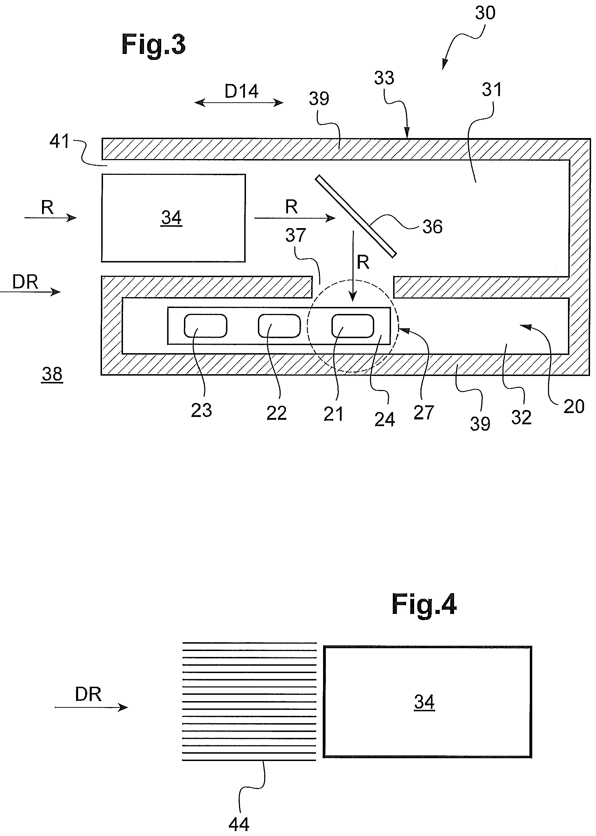

La figure 3 illustre l'utilisation du dispositif de la figure 2 dans une caméra 30 selon l'invention, prévue pour capturer une image en lumière visible dans un environnement radioactif.

Dans l'exemple illustré, la caméra 30 comprend un corps 33 formant deux compartiments 31, 32; les compartiments s'étendant longitudinalement, sensiblement parallèlement à la direction de déplacement D14 de la réglette 24. Un premier compartiment 31, parmi les deux logements 31,32 contient des moyens optiques 34, 36 de la caméra 30. Le deuxième compartiment 32 contient le dispositif de capture 20 de la figure 2.

Les compartiments 31, 32 sont sensiblement isolés de l'environnement 38 extérieur à la caméra 30 par des parois 39 du corps 33 de la caméra ; les compartiments 31, 32 sont aussi sensiblement isolés par d'autres parois 39 du corps, sauf en ce que les compartiments communiquent entre eux par une fenêtre latérale 37 disposée en vis-à-vis de la zone de capture 27 du dispositif de capture 20. La fenêtre 37 peut être une simple ouverture ou comprendre une paroi transparente aux rayons.

Les moyens optiques comprennent un objectif 34 et un miroir 36. Le premier compartiment 31 est sensiblement isolé de l'environnement 38 extérieur à la caméra 30, par des parois 39 du corps 33 de la caméra 30, sauf au travers d'une ouverture 41 occupée par l'objectif 34 ; l'ouverture 41 est formée à une extrémité longitudinale du corps 33. Le miroir 36 est disposé pour renvoyer les rayons issus de l'objectif en direction de la fenêtre 37. Dans l'exemple illustré, le miroir 36 est disposé pour renvoyer les rayons observés R à 90 degrés de leur direction DR initiale.

Dans la position de la figure 3, l'objectif 34 est dirigé sensiblement en direction d'une source de lumière, de sorte que :
- une partie R de ces rayons pénètre longitudinalement dans la caméra, selon la direction DR, au travers de l'objectif 34, puis,
- les rayons R sont renvoyés latéralement par le miroir 36 ; puis,
- les rayons R pénètrent, en traversant la fenêtre 37, dans la zone de capture 27 du dispositif de capture 20 ; et,
- les rayons R viennent frapper le capteur, ici le premier capteur 21, qui se trouve dans la zone d'impression 27.

Une telle caméra permet notamment de séparer les rayonnements aux longueurs d'onde visible, dont on souhaite capturer une image, d'avec les rayonnements radioactifs ; les rayonnements visibles étant renvoyés par le miroir, les rayonnements radioactifs, notamment gammas, traversant le miroir sans être renvoyés.

Dans l'exemple illustré, les parois 39 du corps 33 comprennent un blindage de plomb d'environ 3 cm. L'électronique embarquée dans la caméra 30, non présentée aux figures, est elle aussi protégée par les parois 39. Ainsi, ces parois et l'utilisation du miroir 36 protègent notamment les capteurs 21-23 du bruit formé par des rayonnements du type gamma, qui ne font pas l'objet de l'observation et viendraient trop rapidement saturer les capteurs. Une telle protection permet d'augmenter notablement le temps pendant lequel un capteur peut être utilisé pour la capture avant d'être régénéré.

Dans l'exemple illustré à la figure 4, un collimateur 54 est monté sur l'objectif 44, du côté extérieur à la caméra. Ce collimateur est une galette de plomb, de tungstène ou d'un autre métal de numéro atomique élevé, donc sensiblement étanche aux rayonnements gamma. Cette galette est percée de trous cylindriques ou coniques, parallèlement à un axe d'observation souhaité DR. Le collimateur 54 permet de filtrer les photons, notamment les photons gammas émis par la source observée, de sorte que seuls les photons qui proviennent d'une zone située dans l'axe du collimateur 44 peuvent atteindre l'objectif 34.

Bien sûr, l'invention n'est pas limitée aux exemples qui viennent d'être décrits.

Ainsi, on peut utiliser deux caméras selon l'invention pour obtenir une image fixe ou vidéo en trois dimensions.

On peut aussi utiliser, dans une caméra selon l'invention, le premier mode de réalisation pour un dispositif de capture, c'est-à-dire rotatif, plutôt que celui, translatif, qui illustre la figure 3. Un autre support et mode de déplacement est aussi utilisable.

Selon les temps relatifs optimaux, pour l'exposition, le chauffage et le refroidissement, il peut être utile d'utiliser plus de trois capteurs, de sorte qu'un même capteur peut passer plus ou moins de temps dans une zone qu'une autre. Il peut aussi être suffisant d'utiliser deux capteurs, l'un étant exposé pendant que dans le même temps, le deuxième est chauffé puis refroidi.

Les parois de blindage d'une caméra selon l'invention peuvent être en un autre métal ou tout autre matériau adapté à isoler d'un environnement radioactif.

Un dispositif selon l'invention peut être utilisé dans tout système nécessitant une de prise de vue dans un rayonnement radioactif. Un tel système peut notamment être une caméra prévue pour la capture d'un rayonnement visible, tel que précédemment illustré, et/ou d'un rayonnement gamma.

## Revendications

1. Dispositif (10 ; 20) pour capturer une image dans le domaine des ondes visibles, dans un environnement radioactif, comprenant au moins deux capteurs d'images numériques (11-13 ; 21-23), et des moyens pour régénérer (17 ; 25,28), de préférence par chauffage, chaque capteur alternativement, et **caractérisé en ce qu'**il comprend en outre :
- une zone de capture (16 ; 27) pour l'image ; et,
- au moins une zone (17, 18; 25, 26, 28, 29) pour régénérer lesdits capteurs ;
et un support (14 ; 24) pour les capteurs, ledit support étant mobile entre :
- une position dans laquelle un premier (11 ; 21) des capteurs est dans ladite zone de capture et un deuxième capteur (12, 13 ; 22, 23) est dans ladite zone de régénération ; et,
- une position dans laquelle le deuxième des capteurs est dans une zone de capture et le premier capteur est dans une zone de régénération.

2. Dispositif selon la revendication 1, **caractérisé en ce que** la zone de régénération comprend avantageusement une zone pour chauffer (17 ; 25, 29) les capteurs et une zone pour leur refroidissement (18 ; 26, 29) après chauffage.

3. Dispositif selon l'une des revendications 1 ou 2, **caractérisé en ce que** le support est un support rotatif (14).

4. Dispositif selon l'une des revendications 1 ou 2, **caractérisé en ce que** le support est un support translatif (24).

5. Dispositif selon l'une des revendications 1 à 4, **caractérisé en ce qu'**il comprend trois capteurs, de sorte qu'un premier capteur est dans la zone de capture, pendant qu'un deuxième, précédemment dans la zone de capture, est dans la zone de chauffage, pendant qu'un troisième, précédemment chauffé, est dans la zone de refroidissement.

6. Dispositif selon les revendications 4 et 5, **caractérisé en ce qu'**il comprend, selon l'ordre suivant :
- une première zone de chauffage (25) ;
- une première zone de refroidissement (26) ;
- une zone de capture (27) ;
- une deuxième zone de chauffage (28) ; et,
- une deuxième zone de refroidissement (29).

7. Dispositif selon l'une des revendications précédentes, **caractérisé en ce qu'**il est adapté pour capturer une image d'un rayonnement gamma.

8. Caméra (30), **caractérisée en ce qu'**elle comprend un dispositif de capture (10,20) selon l'une des revendications précédentes.

9. Caméra selon la revendication 8, **caractérisée en ce qu'**elle comprend un corps (33) définissant deux compartiments (31,32) dont un premier compartiment (31) contient un objectif (34) et un miroir (36), et le deuxième compartiment comprend le dispositif de capture (20), le miroir étant disposé pour renvoyer latéralement un rayonnement (R) transmis par l'objectif vers une zone de capture (27) dudit dispositif (20).

10. Caméra selon la revendication 9, **caractérisée en ce que** le corps forme un blindage (39) destiné à protéger le dispositif de capture d'un rayonnement radioactif.

11. Caméra selon l'une des revendications 8 à 10, **caractérisée en ce qu'**elle comprend un collimateur (44).

12. Caméra selon la revendication 11, **caractérisée en ce que** le collimateur est une galette en un métal de numéro atomique élevé, de préférence du plomb ou du tungstène, ladite galette étant percée de trous, de préférence cylindriques ou coniques, parallèlement à un axe d'observation souhaité (DR).

## Patentansprüche

1. Vorrichtung (10; 20) zum Erfassen eines Bildes im Bereich der sichtbaren Wellen in einer radioaktiven Umgebung, umfassend mindestens zwei digitale Bildsensoren (11-13; 21-23) und Mittel zum Regenerieren (17; 25, 28) jedes Sensors abwechselnd, vorzugsweise durch Erwärmen,
**dadurch gekennzeichnet, dass** die Vorrichtung ferner umfasst:
- eine Erfassungszone (16; 27) für das Bild; und
- mindestens eine Zone (17, 18; 25, 26, 28, 29) zum Regenerieren der Sensoren;
und eine Halterung (14; 24) für die Sensoren, wobei die Halterung bewegbar ist zwischen:
- einer Position, in der sich ein erster (11; 21) der Sensoren in der Erfassungszone und ein zweiter Sensor (12, 13; 22, 23) in der Regenerationszone befindet; und
- einer Position, in der sich der zweite der Sensoren in einer Erfassungszone und der erste Sensor in einer Regenerationszone befindet.

2. Vorrichtung nach Anspruch 1, **dadurch gekennzeichnet, dass** die Regenerationszone in vorteilhafter Weise eine Zone zum Erwärmen (17; 25, 29) der Sensoren und eine Zone zum Kühlen (18; 26, 29) nach dem Erwärmen umfasst.

3. Vorrichtung nach einem der Ansprüche 1 oder 2, **dadurch gekennzeichnet, dass** die Halterung eine drehbare Halterung (14) ist.

4. Vorrichtung nach einem der Ansprüche 1 oder 2, **dadurch gekennzeichnet, dass** die Halterung eine translatorische Halterung (24) ist.

5. Vorrichtung nach einem der Ansprüche 1 bis 4, **dadurch gekennzeichnet, dass** diese drei Sensoren umfasst, derart, dass sich ein erster Sensor in der Erfassungszone befindet, während sich ein zweiter Sensor, der sich zuvor in der Erfassungszone befunden hat, in der Erwärmungszone befindet, während sich ein dritter Sensor, der zuvor erwärmt wurde, in der Kühlzone befindet.

6. Vorrichtung nach den Ansprüche 4 und 5, **dadurch gekennzeichnet, dass** diese in der folgenden Ordnung umfasst:
- eine erste Erwärmungszone (25);
- eine erste Kühlzone (26);
- eine Erfassungszone (27);
- eine zweite Erwärmungszone (28); und
- eine zweite Kühlzone (29).

7. Vorrichtung nach einem der vorhergehenden Ansprüche, **dadurch gekennzeichnet, dass** diese zum Erfassen eines Gammastrahlenbildes ausgebildet ist.

8. Kamera (30), **dadurch gekennzeichnet, dass** diese eine Erfassungsvorrichtung (10, 20) nach einem der vorhergehenden Ansprüche umfasst.

9. Kamera nach Anspruch 8, **dadurch gekennzeichnet, dass** diese einen Korpus (33) hat, der zwei Fächer (31, 32) definiert, von denen ein erstes Fach (31) ein Objektiv (34) und einen Reflektor (36) und das zweite Fach die Erfassungsvorrichtung (20) enthält, wobei der Reflektor angeordnet ist zum seitlichen Zurücksenden einer durch das Objekt übertragenen Strahlung (R) in Richtung auf eine Erfassungszone (27) der Vorrichtung (20).

10. Kamera nach Anspruch 9, **dadurch gekennzeichnet, dass** der Korpus eine Abschirmung (39) zum Schutz der Erfassungsvorrichtung vor radioaktiver Strahlung bildet.

11. Kamera nach einem der Ansprüche 8 bis 10, **dadurch gekennzeichnet, dass** diese einen Kollimator (44) umfasst.

12. Kamera nach Anspruch 11, **dadurch gekennzeichnet, dass** der Kollimator ein Wafer aus einem Metall mit höherer Atomzahl ist, vorzugsweise Blei oder Wolfram, wobei der Wafer parallel zu einer gewünschten Beobachtungsachse (DR) mit Löchern durchbohrt ist, vorzugsweise mit zylindrischen oder konischen Löchern.

## Claims

1. Device (10; 20) for capturing an image in a visible wavelength region in a radioactive environment comprising at least two image detectors (11-13; 21-23), and regeneration means (17; 25,28) for alternately regenerating each detector, preferably by heating and **characterised in that** it also comprises:
- an area (16; 27) for capturing the image; and,
- at least one area (17, 18; 25, 26, 28, 29) for regenerating said detectors;
and a support (14; 24) for the detectors, said support being capable of moving between:
- a position wherein a first (11; 21) detector is in said capture area and a second detector (12, 13; 22, 23) is in the regeneration area; and,
- a position wherein the second detector is in a capture area and the first detector is in a regeneration area.

2. Device according to claim 1, **characterised in that** the regeneration area advantageously comprises an area (17; 25, 29) for heating the detectors and an area (18; 26, 29) for cooling the latter after heating.

3. Device according to one of claims 1 or 2, **characterised in that** the support is a rotational support (14).

4. Device according to one of claims 1 or 2, **characterised in that** the support is a translational support (24).

5. Device according to one of claims 1 to 4, **characterised in that** it comprises three detectors, such that a first detector is in the capture area, while a second detector, previously in the capture area, is in the heating area, while a third detector, previously heated, is in the cooling area.

6. Device according to one of claims 4 and 5, **characterised in that** it comprises, in the following order:
- a first heating area (25);
- a first cooling area (26);
- a capture area (27);
- a second heating area (28); and,
- a second cooling area (29).

7. Device according to one of the previous claims, **characterised in that** it is suitable for capturing an image of gamma radiation.

8. Camera (30), **characterised in that** it comprises a capture device (10, 20) according to one of the previous claims.

9. Camera according to claim 8, **characterised in that** it comprises a body (33) defining two compartments (31, 32), one first compartment (31) of which contains a lens (34) and a mirror (36), and the second compartment comprises the capture device (20), whereby the mirror is positioned to laterally reflect radiation (R) transmitted by the lens to a capture area (27) of said device (20).

10. Camera according to claim 9, **characterised in that** the body forms a shield (39) designed to protect the capture device from radioactive radiation.

11. Camera according to one of claims 8 to 10, **characterised in that** it comprises a collimator (44).

12. Camera according to claim 11, **characterised in that** the collimator is a plate made from a metal with a high atomic number, preferably lead or tungsten, said plate being drilled with holes, preferably cylindrical or conical, parallel to a desired observation axis (DR).
